# EUROPEAN PATENT APPLICATION

(11) **EP 4 293 540 A1**
(43) Date of publication of application: **20.12.2023**
(21) Application number: 22773923.2
(22) Date of filing: 09.02.2022
(51) Int. Cl.: G06F 17/15

(54) **MODEL RECOMMENDATION METHOD AND APPARATUS, AND COMPUTER DEVICE**

(30) Priority: 23.03.2021 CN 202110309016
(71) Applicant: Huawei Technologies Co., Ltd., Shenzhen, Guangdong 518129 (CN)
(72) Inventor: WEI, Fuchun, Shenzhen, Guangdong 518129 (CN); WANG, Yongzhong, Shenzhen, Guangdong 518129 (CN); OUYANG, Zhongqing, Shenzhen, Guangdong 518129 (CN)
(74) Representative: Maiwald GmbH
(86) International application number: PCT/CN2022/075585
(87) International publication number: WO 2022/199261

(57) **Abstract**

A model recommendation method is provided. The method includes: A model recommendation apparatus obtains a proxy dataset of an application, where the proxy dataset is used to evaluate a data processing capability of the application, and the application is run on a computing device; and the model recommendation apparatus recommends a model suitable for the application based on the proxy dataset and a hardware parameter of the computing device. In this way, a model applicable to the computing device on which the application is run and an application scenario in which the application is used is recommended for the application, and accuracy of an output result of the application can be improved.

## Description

This application claims priority to Chinese Patent Application No. 202110309016.0, filed with the China National Intellectual Property Administration on March 23, 2021 and entitled "MODEL RECOMMENDATION METHOD AND APPARATUS, AND COMPUTER DEVICE", which is incorporated herein by reference in its entirety.

### TECHNICAL FIELD

This application relates to the field of artificial intelligence (artificial intelligence, AI) technologies, and in particular, to a model recommendation method and apparatus, and a computer device.

### BACKGROUND

In recent years, with development of the artificial intelligence field, computer technologies including deep learning are gradually applied to various industries, and various neural network models emerge. However, there are great differences between structures of different neural network models. For example, quantities of layers of the models are different, quantities of nodes at the layers are different, types of operators of the nodes are different, or connection relationships between layers are different. Neural network models with different structures are applicable to different application scenarios. Therefore, during actual application, a model suitable for a current user requirement needs to be selected from a variety of neural network models. Manual neural network model filtering requires a wealth of expertise and working experience, and a filtering process is extremely time-consuming and labor-consuming.

A neural network model search algorithm can be used to automatically search for and recommend a neural network model suitable for a current application scenario based on training data. Accuracy of the recommended model may exceed that of a manually filtered neural network model to meet a user requirement. However, in a current neural network model recommendation technology, search time is long, a large quantity of computing resources need to be consumed in a search process, and a selected model may fail to be fully applicable to the current application scenario. Therefore, how to provide an efficient model recommendation method that can be used to sense a computing capability of a device used by a user becomes a technical problem to be urgently resolved.

### SUMMARY

This application provides a model recommendation method and apparatus and a computer device, to provide an efficient model recommendation method that can be used to sense a computing capability of a device used by a user, and improve a data processing capability of an application.

According to a first aspect, a model recommendation method is provided. The method includes: obtaining a proxy dataset of an application, where the proxy dataset is used to evaluate a data processing capability of the application, and the application is run on a computing device; and recommending a model suitable for the application based on the proxy dataset and a hardware parameter of the computing device. According to the foregoing method, a model applicable to the computing device running the application and an application scenario in which the application is used may be recommended for the application, and accuracy of an output result of the application may be improved.

In a possible implementation, the model recommendation method is run on a first device. Before the recommending a model suitable for the application, the method includes: A data center obtains the hardware parameter of the computing device, and the data center further specifies the first device based on the hardware parameter of the computing device, where a hardware parameter of the first device is the same as the hardware parameter of the computing device. According to the foregoing method, a user may directly perform the model recommendation method by using another device without executing a model recommendation algorithm on the computing device running the application, to reduce resource consumption of the computing device.

In another possible implementation, the model recommendation method is run on the computing device. According to the foregoing method, in the model recommendation method, the hardware parameter of the computing device running the application may be directly obtained.

In another possible implementation, the recommending a model suitable for the application based on the proxy data and a hardware parameter of the computing device includes: determining a set of basic operations suitable for the application based on the hardware parameter of the computing device, where the set includes a plurality of basic operations; determining a connection structure suitable for the application based on the hardware parameter of the computing device, where the connection structure is used to combine the plurality of basic operations into different models; and finally, recommending the model suitable for the application based on the set of basic operations, the connection structure, and the proxy dataset. According to the foregoing method, in the model recommendation method, a data processing speed of the application may be increased, and the basic operation and the connection structure that are suitable for the application are selected to form the model.

In another possible implementation, the connection structure includes a branch structure and an input structure.

In another possible implementation, the data processing capability of the application to process: data processing accuracy and data processing efficiency of the application.

In another possible implementation, the hardware parameter of the computing device includes a type of a chip included in the computing device, a quantity of cores of the chip, or a clock rate of the chip.

According to a second aspect, this application provides a model recommendation apparatus. The model recommendation apparatus may be located on a computing device or may be an independent device. The model recommendation apparatus includes modules configured to perform the model recommendation method according to any one of the first aspect or the possible implementations of the first aspect.

According to a third aspect, this application provides a model recommendation system, including a computing device and a model recommendation apparatus. The computing device is configured to run an application. The model recommendation apparatus may be located on the computing device or may be an independent device, and the model recommendation apparatus is configured to implement the operation steps of the method performed by a corresponding subject in any one of the first aspect and the possible implementations of the first aspect.

According to a fourth aspect, this application provides a computing device. The computing device includes a processor and a memory. The memory is configured to store computer-executable instructions, and when the computing device runs, the processor executes the computer-executable instructions in the memory to perform the operation steps of the method according to any one of the first aspect or the possible implementations of the first aspect by using a hardware resource in the computing device.

According to a fifth aspect, this application provides a computer-readable storage medium. The computer-readable storage medium stores instructions, and when the instructions are run on a computer, the computer is enabled to perform the operation steps of the method according to any one of the first aspect or the possible implementations of the first aspect.

According to a sixth aspect, this application provides a computer program product including instructions. When the computer program product runs on a computer, the computer is enabled to perform the operation steps of the method according to any one of the first aspect or the possible implementations of the first aspect.

In this application, based on the implementations according to the foregoing aspects, the implementations may be further combined to provide more implementations.

### BRIEF DESCRIPTION OF DRAWINGS

FIG. 1 is a system architectural diagram according to an example embodiment of this application;
FIG. 2 is a schematic flowchart of a model recommendation method according to this application;
FIG. 3 is a schematic structural diagram of a 7*7 convolution operation according to an embodiment of this application;
FIG. 4(a) to FIG. 4(d) are a schematic diagram of convolution operators in different implementations according to an embodiment of this application;
FIG. 5 is a schematic diagram of different branch structures according to this application;
FIG. 6 is a schematic diagram of different input structures according to this application;
FIG. 7 is a schematic diagram of a pareto solution set according to an embodiment of this application;
FIG. 8 is a schematic flowchart of determining a set of basic operations according to an embodiment of this application;
FIG. 9 is a schematic flowchart of a method for scoring a connection structure of basic operators according to an embodiment of this application;
FIG. 10 is a schematic flowchart of an evolution based model search algorithm according to this application;
FIG. 11 is a schematic diagram of calculating a value of R according to this application;
FIG. 12A and FIG. 12B are a schematic diagram of a mutation operation according to an embodiment; and
FIG. 13 is a schematic diagram of a model recommendation apparatus according to an embodiment.

### DESCRIPTION OF EMBODIMENTS

The following describes technical solutions in embodiments of this application with reference to the accompanying drawings.

According to a model recommendation method provided in embodiments of this application, at least one neural network model that is suitable for processing a current application scenario and that meets a processing capability of a computing device may be recommended for a user, and a system architecture to which embodiments of this application are applicable is described before a model search method provided in embodiments of this application is described.

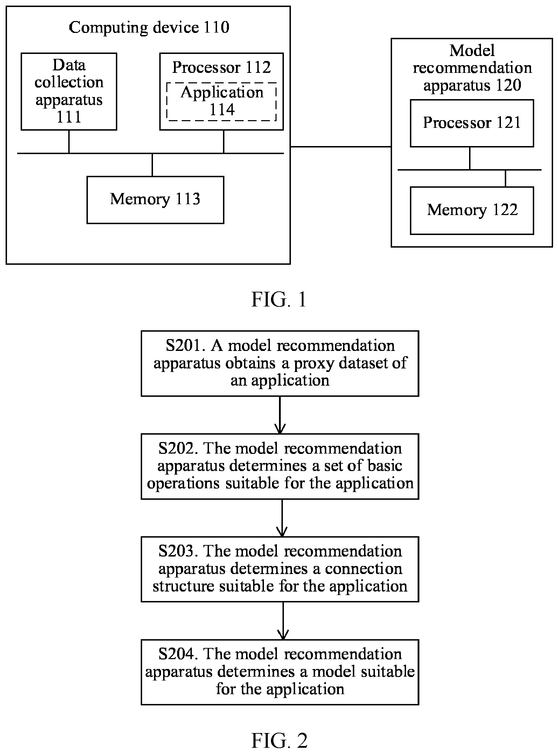

FIG. 1 is a schematic diagram of a system 100 of a model recommendation apparatus according to an embodiment of this application. As shown in the figure, the system 100 includes a computing device 110 and a model recommendation apparatus 120.

The computing device 110 is configured to receive data generated in an application scenario and perform various types of calculation processing on the data, and may further include a data collection apparatus 111, a processor 112, and a memory 113. The data collection apparatus 111, the processor 112, and the memory 113 are connected through a bus. The bus may be a data bus, or may be a power bus, a control bus, a status signal bus, or the like. The bus may alternatively be a bus of another type for implementing a connection between components within a device.

The data collection apparatus 111 is configured to collect the data generated in the application scenario. The data may be a picture, a voice, a video, a text, or data of another type. An application 114 is run on the processor 112 and may use a particular model to process the data collected by the data collection apparatus 111, to output a calculation result required by a user. The model includes a plurality of identical or different basic operators combined in different connection manners, and each basic operator may be considered as an operation on input data. For example, a convolution operator may be used to extract a feature of the input data, and a pooling operator may be used to sample the input data. Different applications may meet different requirements by using different models. For example, in an application scenario of community face recognition, a face recognition application may be used to invoke the data collection apparatus 111 (a camera) to obtain data of a face image and then calculate a similarity between the data of the face image and a pre-stored face image of community personnel by using a face recognition model, to permit access of community personnel who meet a requirement.

Optionally, the computing device 110 may further include a graphics processing unit (graphics processing unit, GPU), and the application 114 may use the GPU to run a particular model.

A model suitable for an application needs to meet a requirement of an application scenario and match a computing capability of a computing device running the application (for example, the computing device 110). For example, for a computing device with a lower calculation speed, much and complex data processing should be avoided in a model. For another example, for a computing device with more processor cores, a model may include more branches for performing parallel processing on data.

The computing device 110 is an electronic device having a computing capability, and may be a terminal computing device (for example, a notebook computer, a mobile phone, a personal desktop computer, or a community gate), may be a server, or may be a server cluster including several servers, or a cloud computing service center. This is not limited in embodiments of this application. It should be noted that the data collection apparatus 111 may be a hardware component of the computing device 110 or an independent device. As shown in FIG. 1, the data collection apparatus 111 is integrated within the computing device 110, and in other embodiments, the data collection apparatus 111 may be located in an independent device.

The model recommendation apparatus 120 is configured to recommend a model that meets a requirement of the application scenario and the computing capability of the computing device for the application 114, and includes a processor 121 and a memory 122.

For example, the memory 122 may be configured to basic operators for forming different models, and may include a read-only memory and a random access memory, and provide instructions and data to the processor 121. The memory 122 may alternatively include a non-volatile random access memory. For example, the memory 122 may further store information about a type of the device.

The memory 122 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. By way of example but not limitative description, many forms of RAMs are available, such as a static random access memory (static RAM SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The processor 121 is configured to use different models formed by different basic operators and select a model suitable for the application from the different models to recommend to the application 114. The processor 121 may be a CPU, another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor or any conventional processor or the like.

The model recommendation apparatus 120 may also be a terminal computing device, a server, or a server cluster including several servers, or a cloud computing service center. A wired or wireless transmission mode may be used between the model recommendation apparatus 120 and the computing device 110. The wired transmission mode includes data transmission using the Ethernet, an optical fiber, and the like, and the wireless transmission manner includes a mobile hotspot (Wi-Fi) transmission mode, a Bluetooth transmission mode, an infrared transmission mode, and the like.

In other embodiments, the model recommendation apparatus 120 may also be a hardware component on a hardware apparatus or a set of software apparatus running on a hardware apparatus. In this case, the processor 121 and the memory 122 may be a processor and a memory of the hardware apparatus on which the model recommendation apparatus is located. The hardware apparatus may also be a terminal computing device, a server, or a server cluster including several servers, or a cloud computing service center, and in particular, may be the computing device 110 in FIG. 1. For ease of description, in this embodiment, the processor of the hardware apparatus on which the model recommendation apparatus 120 is located is also referred to as the processor of the model recommendation apparatus 120, and the memory of the hardware apparatus in which the model recommendation apparatus 120 is located is also referred to as the memory of the model recommendation apparatus 120.

Optionally, the processor 121 and the memory 122 forming the model recommendation apparatus 120 may be separately deployed in different systems or hardware apparatuses.

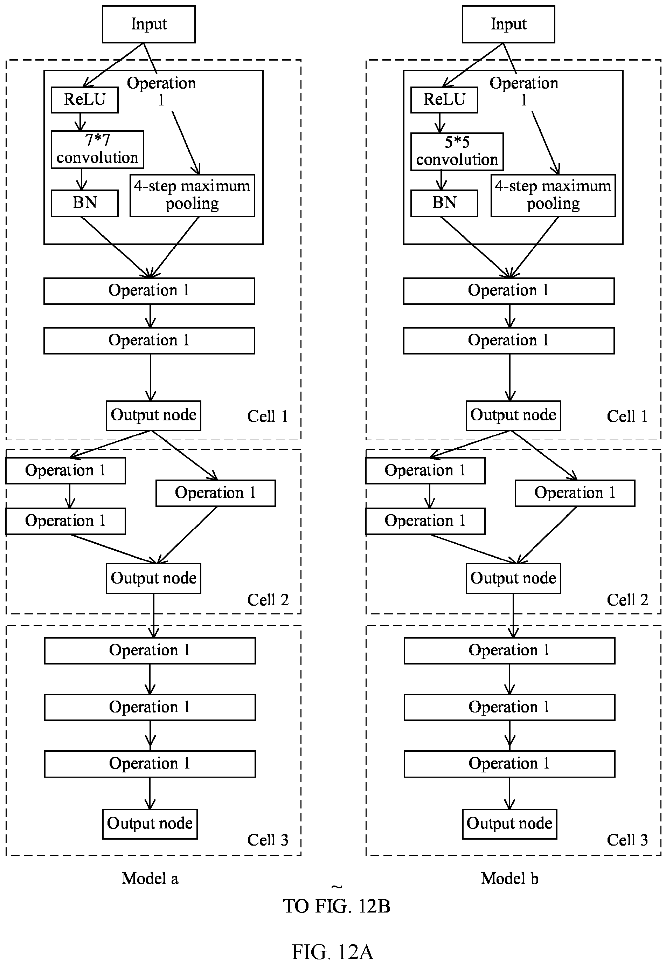

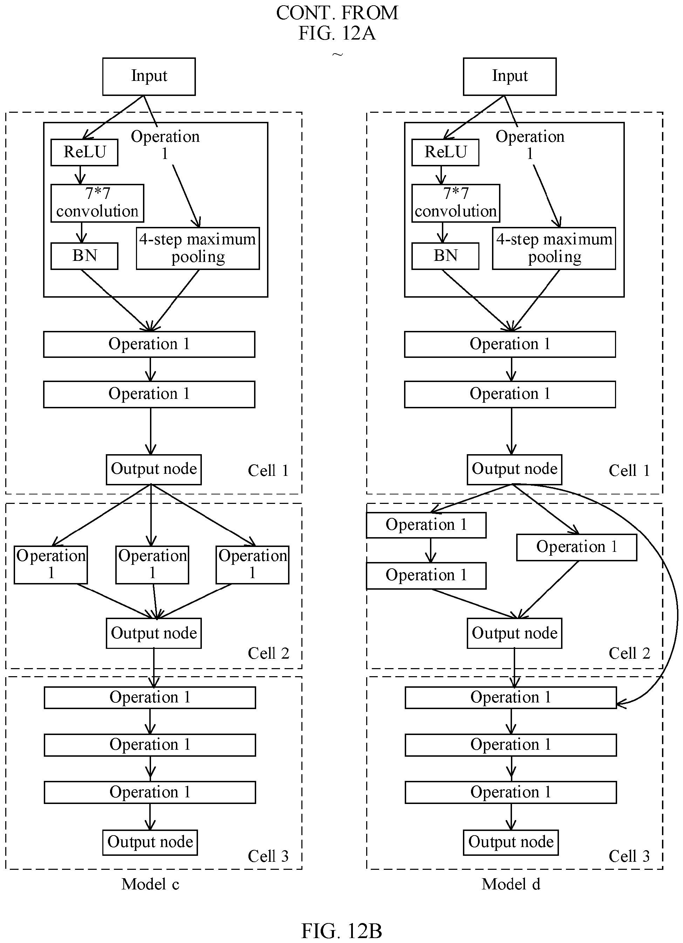

The following describes the model recommendation method provided in embodiments of this application with reference to FIG. 2 to FIG. 12A and FIG. 12B. FIG. 2 is a schematic flowchart of the model recommendation method according to this application. The method may be performed by the model recommendation apparatus 120 shown in FIG. 1, and as shown in the figure, the method specifically includes the following steps.

S201. The model recommendation apparatus 120 obtains a proxy dataset of an application.

The proxy dataset includes proxy input data and a label corresponding to the proxy input data. The proxy input data is a part of data obtained by the application from the data collection apparatus 111 in FIG. 1, and the label is a real result corresponding to the part of the input data. A data processing capability of the application may be evaluated by inputting the proxy input data to the application and comparing a calculation result obtained through model calculation by the application with the label corresponding to the proxy input data. A smaller difference between the calculation result obtained by the application and the label indicates higher accuracy of processing the data by the application. Shorter time taken by the application to obtain the calculation result indicates higher efficiency of processing the data by the application.

When the model recommendation apparatus 120 is located on the computing device 110, the model recommendation apparatus may obtain the proxy input data from the data collection apparatus 111 used by the application 114, and label the proxy input data. Optionally, the model recommendation apparatus may further use a proxy dataset preset by a user.

When the model recommendation apparatus 120 is located on an independent device or the model recommendation apparatus 120 is an independent device, the computing device 110 or the user may send a hardware parameter of the computing device to a cloud data center. The hardware parameter includes a type of a processor used when the application 114 is run, a quantity of cores of the processor, a clock rate of the processor, or a type of the GPU. The data center may obtain hardware parameters of all model recommendation apparatuses in advance, and then specify, based on a hardware parameter sent by the computing device 110 or the user, model recommendation apparatuses with a same hardware parameter to perform the model recommendation method. Optionally, the data center may further construct, by using a virtualization technology based on the hardware parameter of the computing device sent by the user, a virtual computing device with a same hardware parameter, and run the model recommendation apparatus on the virtual computing device. Then, the computing device 110 or the user may send the proxy dataset to the model recommendation apparatus.

S202. The model recommendation apparatus determines a set of basic operations suitable for the application.

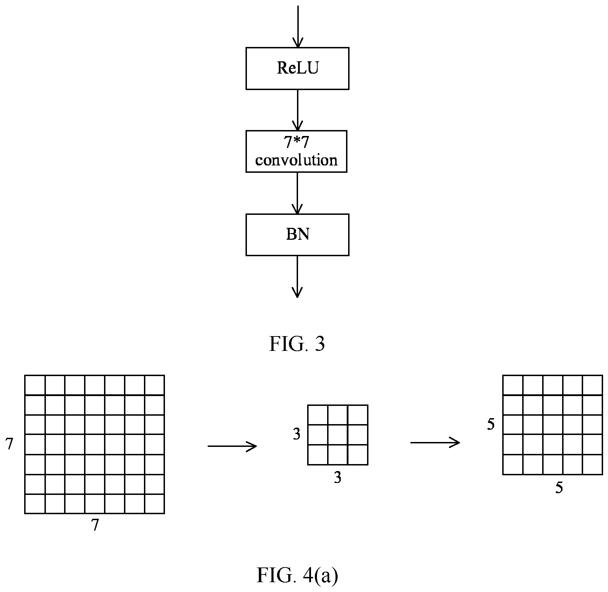

One basic operation may directly include one basic operator. For example, a pooling operation may include a pooling operator with a same step. For example, a 2-step pooling operation includes a 2-step pooling operator, and one piece of data may be output at an interval of two pieces of data. Alternatively, one basic operation may be formed by combining a plurality of basic operators. For example, a convolution operation may include a convolution operator with a same size of a convolution kernel, a rectified linear unit (rectified linear unit, ReLU) operator, and a batch normalization (batch normalization, BN) operator. The ReLU operator is used to enhance a non-linear relationship between an input and an output of the model, and an expression is Relu(x)=max(0, x). The BN operator is used to use a normalization transformation function to transform the input data into a normal distribution with a mean value of 0 and a unit variance. FIG. 3 is a schematic structural diagram of a 7*7 convolution operation according to an embodiment of this application. As shown in the figure, the 7*7 convolution operation is formed by linearly connecting a Relu operator, a 7*7 convolution operator, and a BN operator.

Basic operations include but are not limited to: a 1*1 convolution operation, a 3*3 convolution operation, a 5*5 convolution operation, a 7*7 convolution operation, a 2-step pooling operation, and a 3-step pooling operation.

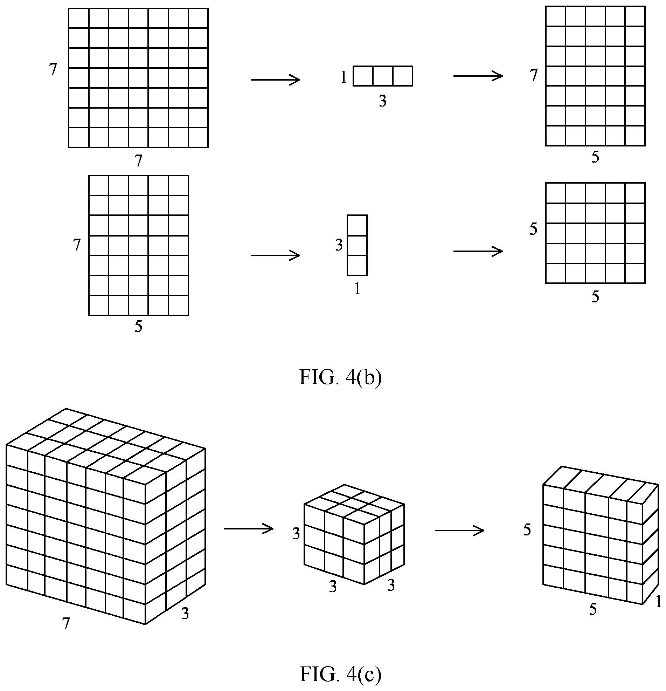

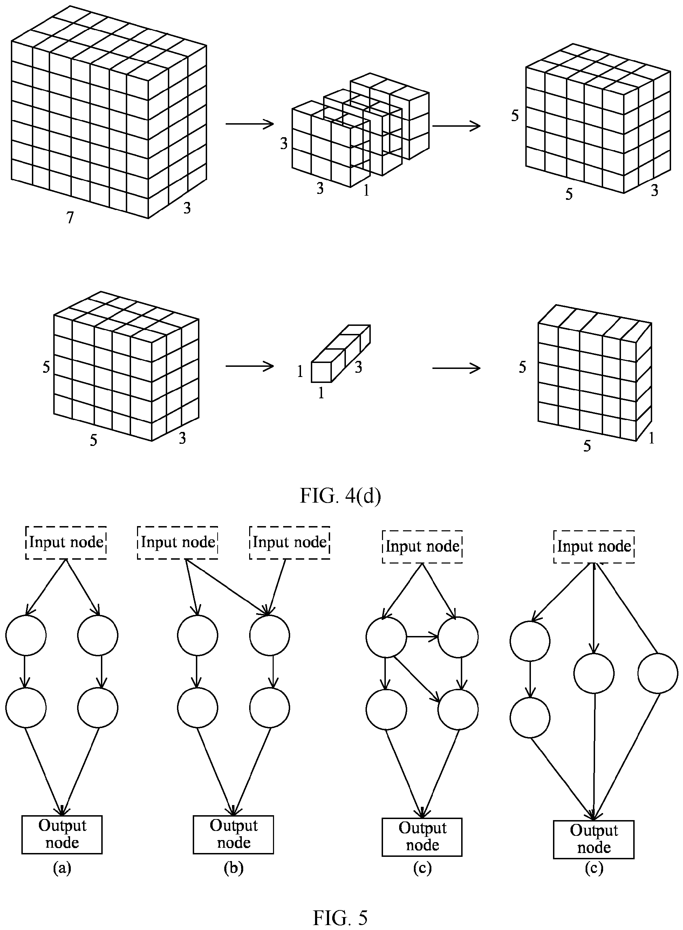

During actual application, the convolution operator in the convolution operation may be implemented in different manners. For example, the 3*3 convolution operator may be a 3*3 standard convolution operator, or may be a 3*3 combined convolution operator formed by combining a 3*1 convolution operator and a 1*3 convolution operator. Both the two operators can implement a 3*3 convolution function. For another example, the 3*3*3 convolution operator may be a 3*3*3 standard convolution operator, or may be a 3*3*3 depthwise separable convolution operator formed by combining three 3*3*1 convolution operators and one 1*1*3 convolution operator. Both the two operators can implement a 3*3*3 convolution function. FIG. 4(a) to FIG. 4(d) are a schematic diagram of convolution operators in different implementations according to an embodiment of this application. In FIG. 4(a), after being processed by a middle 3*3 standard convolution operator, 7*7 to-be-processed data on the left is transformed into 5*5 data on the right. In FIG. 4(b), to-be-processed data may alternatively be processed by a 3*3 combined convolution operator, that is, the to-be-processed data is first processed by a 3*1 convolution operator and then processed by a 1*3 convolution operator, to obtain a same processing result. In FIG. 4(c), after being processed by a middle 3*3*3 standard convolution operator, 7*7*3 to-be-processed data on the left is transformed into 5*5*1 data on the right. In FIG. 4(d), to-be-processed data may alternatively be processed by a 3*3*3 depthwise separable convolution operator, that is, the to-be-processed data is first processed by three 3*3*1 convolution operators and then processed by a 1*1*3 convolution operator, to obtain a same processing result. Therefore, one convolution operation may be classified into three different convolution operations: a standard convolution operation, a combined convolution operation, and a depthwise separable convolution operation; and the three convolution operations can implement a same convolution function.

Similarly, the pooling operator in the pooling operation may also be implemented in different manners. For example, a 4-step pooling operator may be a 4-step average pooling operator, and an implementation is that a mean value of every four pieces of data is used as a sample value for output, or a 4-step pooling operator may be a 4-step maximum pooling operator, and an implementation is that a maximum value of every four pieces of data is used as a sample value for output. Therefore, one pooling operation may be classified into an average pooling operation and a maximum pooling operation, and the two operations can implement a same sampling function.

All basic operations may be stored in the memory of the model recommendation apparatus in advance. When the model recommendation method is performed, the model recommendation apparatus selects, from the memory by using a model search method, basic operations suitable for the application to form a recommended model. Basic operations that implement a same function are replaceable in the model and can be marked with replaceable labels. Replaceable basic operations that implement different functions can be marked with different replaceable labels. For example, 0 may be used to identify an irreplaceable basic operation, 1 may be used to identify a 4-step average pooling operation and a 4-step maximum pooling operation, and 2 may be used to identify a 7*7 depthwise separable convolution operation, a 7*7 combined convolution operation, and a 7*7 standard convolution operation.

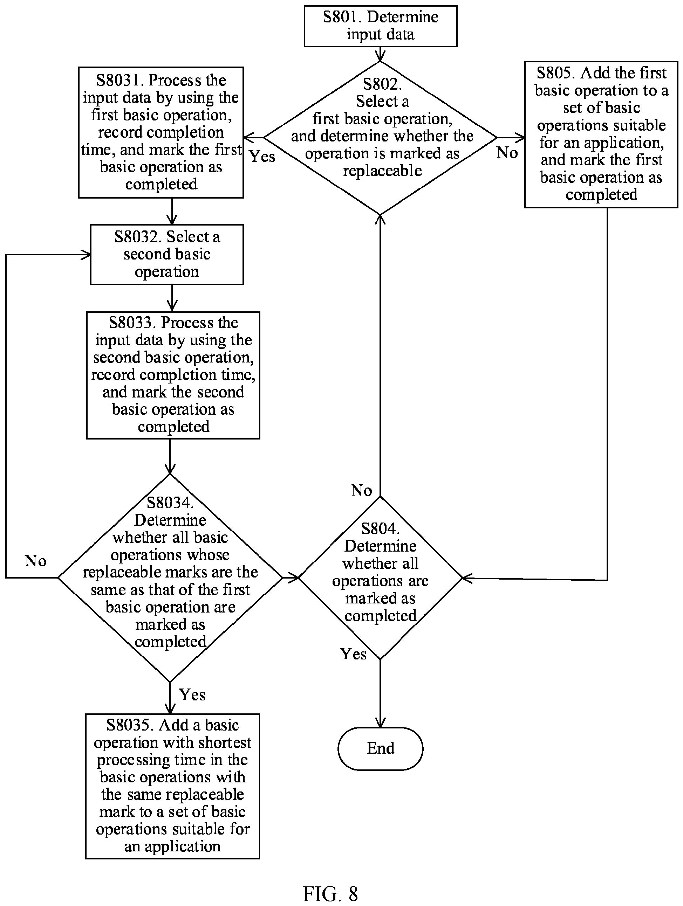

Due to different designs of chip architectures in the computing device 110, calculation time required for the basic operations varies in different implementations. Therefore, time for completing data processing by all replaceable basic operations may be recorded, and for basic operations having a same function, a basic operation whose processing time is less than a threshold is selected from the basic operations and added to a set of basic operations suitable for the application. A specific selection method is described in detail below with reference to FIG. 8.

S203. The model recommendation apparatus determines a connection structure suitable for the application.

The connection structure is used to combine basic operations into a model. A plurality of basic operations may be combined into one operation, which is also referred to as an operation node. A plurality of operation nodes may be interconnected to form a cell (cell), and each cell further includes an output node. A plurality of cells are combined into a model, and each cell may be connected to output nodes of a plurality of cells at the same time.

Therefore, the connection structure may include two parts: a branch structure used to describe a parallel relationship when a plurality of operation nodes form a cell, and an input structure used to describe an input relationship between a plurality of cells.

Different branch structures may be identified by quantities of operation nodes and quantities of branches in the branch structures, and are denoted as m-n branch structures, where m represents the quantity of operation nodes, and n represents the quantity of branches.

The quantity of branches may be calculated based on a sum (Q+W+E) of a quantity Q of connections of output nodes of another cell connected to a cell, a maximum quantity W of connections of an operation node in the cell, and a quantity E of connections of an output node. FIG. 5 is a schematic diagram of different branch structures according to this application. For example, one cell includes four operation nodes. As shown in FIG. 5, a solid line box represents an output node, a circle represents an operation node, and a dashed line box represents an output node of another cell connected to the cell. For ease of description, the dashed line box is also referred to as an input node of the cell in FIG. 5. In (a) in FIG. 5, a cell has one input node that is connected to two operation nodes, and a value of Q is 2. In addition, each operation node in the cell is connected to only one operation node, and a maximum quantity W of connections is 1. The output node is connected to two operation nodes, and a value of E is 2. In conclusion, a quantity of branches of the cell in (a) in FIG. 5 is 5, and a branch structure is 4-5. In (b) in FIG. 5, a cell has two input nodes that are respectively connected to two operation nodes and one operation node, and a value of Q is 3. Similarly, a value of W is 1, and a value of E is 2. In this case, a quantity of branches of the cell in (b) in FIG. 5 is 6, and a branch structure is 4-6. In (c) in FIG. 5, a value of Q is 2, a value of W is 3, a value of E is 2, a quantity of branches is 7, and a branch structure is 4-7. In (d) in FIG. 5, a value of Q is 3, a value of W is 1, a value of E is 3, a quantity of branches is 7, and a branch structure is 4-7. Because computing devices of different hardware platforms have different parallel data processing capabilities, models of different branch structures require different calculation time when being used in the computing devices of different hardware platforms. During actual application, a branch structure of a computing device of a hardware platform on which an application is run in affinity mode should be selected to form a model.

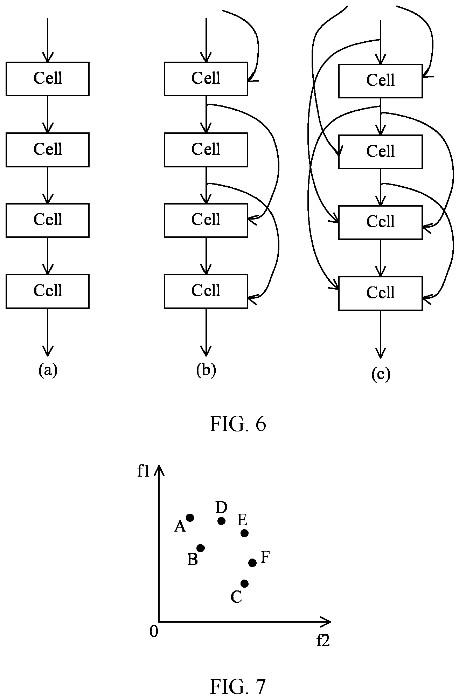

The input structure may be identified by a quantity of output nodes of another cell connected to a cell in the model. For example, FIG. 6 is a schematic diagram of different input structures according to this application. Four cells are used as an example. As shown in FIG. 6, each block represents a cell. In (a) in FIG. 6, an input of each cell is related only to a previous cell connected to the cell, and is denoted as a one-input structure. In (b) in FIG. 6, an input of each cell is related to the first two cells connected to the cell, and is denoted as a two-input structure. In (c) in FIG. 6, an input of each cell is related to the first three cells connected to the cell, and is denoted as a three-input structure. When an input of a cell is related to a plurality of cells, for example, in (b) in FIG. 6, to calculate a current cell, an output of the first two cells needs to be additionally transferred to a memory of a computing unit. A memory architecture used by some computing devices 110 during design is sensitive to a delay caused by a plurality of memory transfers, and these computing devices 110 are not suitable for using a multi-input structure in a model. Therefore, during actual application, an input structure of a computing device that runs an application in affinity mode should be selected to form a model.

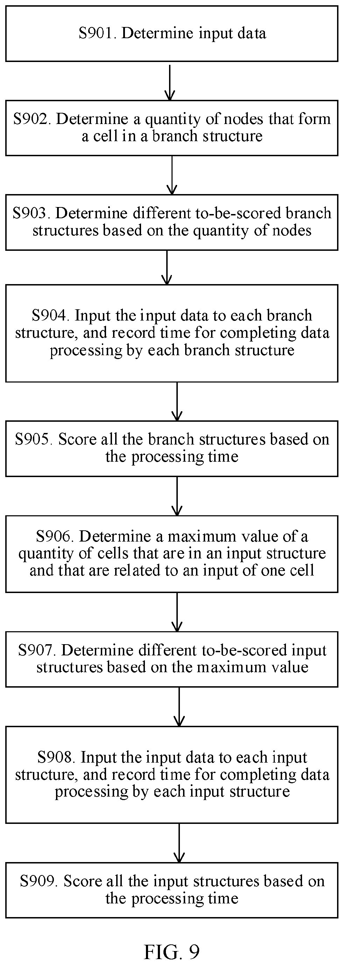

In this embodiment, time for completing data processing by all different branch structures and different input structures may be recorded, and the branch structure and the input structure are scored based on the time, so that a branch structure and an input structure that are suitable for the application may be selected. A specific scoring method is described in detail below with reference to FIG. 9.

S204. The model recommendation apparatus determines a model suitable for the application.

A model search algorithm may be used to combine different types and quantities of basic operations into different models through different connection structures, and select a model suitable for the application from the models as a recommended model. When selecting the recommended model, accuracy and time of processing data by the model and a score of a connection structure of the model need to be considered. This is a multi-objective optimization problem (multi-objective optimization problem, MOP). For a multi-objective optimization problem, due to a phenomenon of a conflict between objectives, a solution is the best for a specific objective, and may be the worst for other objectives. When any objective function is improved, a solution that inevitably weakens at least one other objective function is referred to as non-dominant solution or a pareto solution, and a set of pareto solutions is referred to as a pareto solution set. FIG. 7 is a schematic diagram of a pareto solution set according to an embodiment of this application. As shown in the figure, a multi-objective optimization problem includes two optimization objectives. It is expected that values of f1 and f2 are both minimized, and an objective function is f=(flmin, f2min). Values of f1 and f2 of A are less than a value of D, indicating that A dominates D, the value of f2 of A is less than a value of f2 of B, but the value of f1 of A is greater than a value of f1 of B, indicating that A and B are in a non-dominant relationship. Three points: A, B, and C are all pareto solutions, belong to the pareto solution set, and are in a non-dominant relationship.

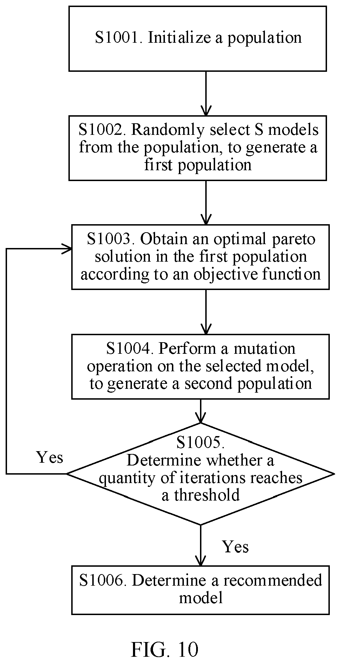

There are many solutions for solving the multi-objective optimization problem, including an objective planning method, an objective decomposition method, a method for reducing objectives (reducing a quantity of a plurality of objectives to 1), an evolution algorithm based method, learning algorithm reinforcement, and the like. An evolution algorithm may be used to optimize a plurality of objective functions at the same time, and output a pareto solution set. The model recommendation apparatus may determine an appropriate recommended model by using an evolution based model search algorithm and considering three optimization objectives: data processing accuracy of the model, data processing time, and a score of a connection structure of the model. The following describes, in detail with reference to FIG. 10, a schematic flowchart of an evolution based model search algorithm according to this application.

According to the method provided in this application, a model applicable to the computing device running the application and an application scenario in which the application is used may be recommended for the application, to increase a data processing speed of the application and improve accuracy of an output result of the application.

FIG. 8 is a schematic flowchart of determining a set of basic operations according to an embodiment of this application. A process may be performed by the model recommendation apparatus 120 shown in FIG. 1. As shown in the figure, a determining method is specifically as follows:
S801. Determine input data. In this method, neither a quantity of input data nor a value of the input data is limited, and same input data may be used for all basic operations.
S802. Select a first basic operation; and determine whether the first basic operation is marked as replaceable, and if yes, perform S5031, or if no, perform S505.
S8031. Process the input data by using the first basic operation, record time for completing processing, and mark the first basic operation as completed.
S8032. Select a second basic operation that is not marked as completed and whose replaceable mark is the same as that of the first basic operation.
S8033. Process the input data by using the second basic operation, record time for completing processing, and mark the second basic operation as completed.
S8034. Determine whether all basic operations whose replaceable marks are the same as that of the first basic operation are marked as completed, and if no, repeat S8032 and S8033, or if yes, continue to perform S8035.
S8035. Add a basic operation with shortest processing time in the basic operations with the same replaceable mark to a set of basic operations suitable for an application.
S804. Determine whether all basic operations are marked as completed, and if no, perform S802 until all the basic operations are marked as completed.
S805. Add the first basic operation to a set of basic operations suitable for an application, and mark the first basic operation as completed.

According to the foregoing method, only a basic operation whose processing time is less than a threshold in replaceable basic operations that implement a same function may be added to a set of basic operations suitable for an application, to reduce a quantity of basic operations that need to be searched for in model search, and the selected basic operations are more suitable for a computing device used to run the application later. After the set of basic operations suitable for the application is determined, a connection structure suitable for the application may be further determined.

FIG. 9 is a schematic flowchart of a method for scoring a connection structure of basic operators according to an embodiment of this application. The method may be performed by the model recommendation apparatus 120 shown in FIG. 1. As shown in the figure, a specific process is as follows:
S901. Determine input data. In this method, neither a quantity of input data nor a value of the input data is limited, and same input data may be used for all branch structures.
S902. Determine a quantity of operation nodes that form a cell in the branch structure. The quantity of operation nodes may be specified by a user, or may be set based on an empirical value. Optionally, the value may alternatively be a range.
S903. Determine different to-be-scored branch structures based on the quantity of nodes. When a branch structure includes a plurality of different connection manners, any connection manner may be selected as a to-be-scored branch structure in the case of the quantity of branches. In this method, an objective is to test computing efficiency of different branch structures in a computing device running an application. Therefore, a type of an operation in a node is not limited, and a same operation may be used in operation nodes of all branch structures.
S904. Input the input data to each branch structure, and record time for completing data processing by each branch structure.
S905. Score all the branch structures based on the processing time, so that a branch structure with shorter processing time has a higher score. A scoring manner is not limited in this application. For example, a processing time threshold T1 may be set. When processing time t1 of a branch structure is greater than T1, a score of the branch structure is 0. When processing time t1 of a branch structure is less than T1, a score is (T1+t1)*A, where A is an amplification parameter, and may be set based on an empirical value.

Optionally, different levels may be set based on the processing time. For example, a branch structure whose processing time is less than T1 may be set to a level 1, a branch structure whose processing time is between T1 and T2 may be set to a level 2, and a branch structure whose processing time is greater than T2 may be set to a level 3.

S906. Determine a maximum value of a quantity of cells that are in the input structure and that are related to an input of one cell. The value may be specified by the user or may be set based on an empirical value.

S907. Determine different to-be-scored input structures based on the maximum value. Similar to S906, a same quantity of cells and cells of a same structure may be used in all to-be-scored input structures. A quantity of cells may be any number greater than the maximum value in S907, and may be generally set to the maximum value plus 1.

S908. Input the input data to each input structure, and record time for completing data processing by each input structure.

S909. Score all the input structures based on the processing time, so that an input structure with shorter processing time has a higher score. A method similar to S905 may be used. After scoring criteria for computing efficiency of different branch structures and input structures on the computing device running the application are determined, a branch structure and an input structure of a model that are found in a next step may be correspondingly scored, to select a model suitable for running on the computing device running the application.

FIG. 10 is a schematic flowchart of an evolution based model search algorithm according to this application. A process may be performed by the model recommendation apparatus 120 shown in FIG. 1. As shown in the figure, a specific method is as follows:
S1001. Initialize a population.

The population is a collective name of a plurality of models. The model search algorithm may be used to randomly combine different types of basic operations into P models by using different connection structures, and the P models are used as a population. A quantity of cells that form each model is the maximum value in S806, and a quantity of nodes that form each cell is the quantity of nodes in S902.

The quantity P of models in the initialized population may be set based on an empirical value.

Input data in a proxy dataset is divided into two parts: a training set and a validation set, and a part of data in the training set and a label corresponding to the part of data are used as input data of a model, to train each model in the population, to obtain a trained population.

S1002. Randomly select S models from the population, to generate a first population.

S1003. Obtain an optimal pareto solution in the first population according to an objective function.

According to the foregoing descriptions, when selecting a recommended model, three optimization objectives: data processing accuracy of the model, data processing time, and a score of a connection structure of the model need to be considered. The objective function is f=(Amin, Lmin, Rmax), where A represents a difference between output data obtained by the model and actual data, L represents calculation time for completing data processing by the model, and R represents the score of the connection structure of the model.

For a value of A and a value of L of the model, data in the validation set may be input to each model in the first population, to obtain output data, and time for completing data processing by each model is recorded. The value of A is equal to a difference between a label corresponding to the output data and a label corresponding to the data in the validation set, and the value of L is equal to the time for completing data processing by the model.

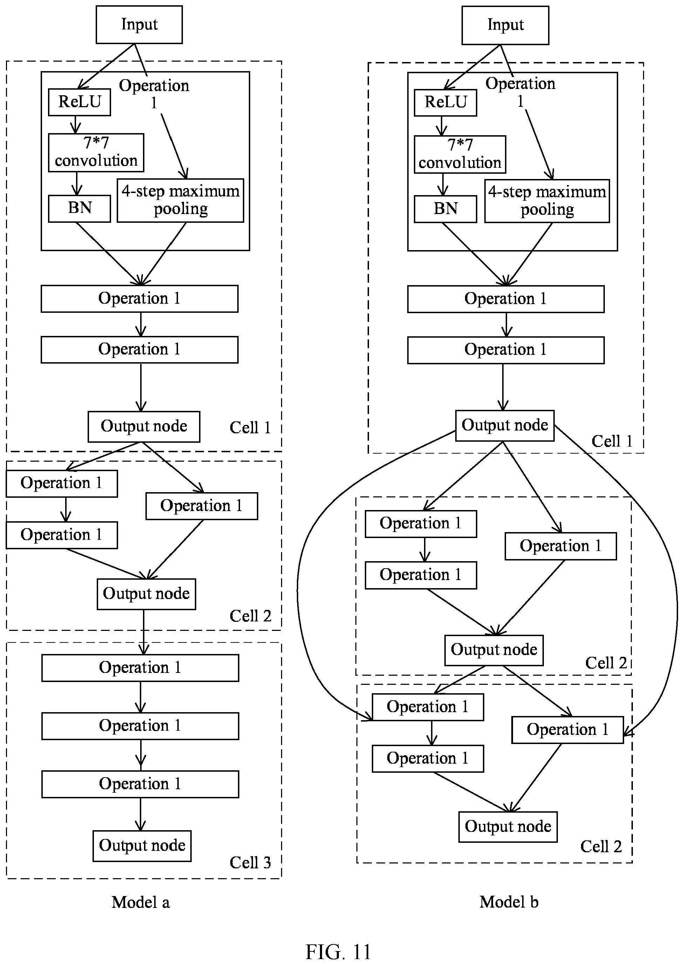

A value of R of the model may be obtained based on the scores of the branch structure and the input structure obtained in step S203. The value of R is equal to the score of the branch structure of each cell of the model multiplied by the score of the input structure. FIG. 11 is a schematic diagram of calculating a value of R by a model according to this application. It is assumed that scores of a 3-3 branch structure and a 3-5 branch structure are respectively M1 and M2, and scores of a one-input structure and a two-input structure are respectively N1 and N2. As shown in the figure, a model a and a model b each include three cells, each cell includes three nodes, and each node includes at least one identical or different operation. If branch structures of the cells in the model a are a 3-3 branch structure, a 3-5 branch structure, and a 3-3 branch structure, and an input structure is a one-input structure, a value of R of the model a is (M1+M2+M1)*N1. If branch structures of the cells in the model b are a 3-3 branch structure, a 3-5 branch structure, and a 3-5 branch structure, and an input structure is a two-input structure, a value of R of the model b is (M1+M2+M2)*N2.

Values (A, L, and R) of three parameters of each model in the first population are calculated, and a model corresponding to a pareto solution of the objective function f is selected.

S1004. Perform a mutation operation on the selected model, to generate a second population.

A mutation operation is performed on each selected model, including changing any basic operation, changing a branch structure between nodes, or changing an input structure between cells. FIG. 12A and FIG. 12B are a schematic diagram of a mutation operation according to an embodiment. As shown in the figure, the mutation operation is not performed on the model a, and models b, c, and d may all be models obtained by performing the mutation operation on the model a.

The model obtained through the mutation operation is retrained by using the part of data in the training set in S 1 00 1, the trained model is added to the first population, and a model that exists for longest time in the first population is deleted, to generate the second population. A quantity of deleted models is equal to a quantity of newly added models.

S1005. Use steps S1003 to S1004 as one iteration, determine whether a quantity of iterations reaches a threshold, and if the quantity of iterations does not reach the threshold, use the second population as the first population, and repeatedly perform S1003 and S1004; or if the quantity of iterations reaches the threshold, stop the iteration.

S1006. Determine a recommended model.

Similar to step S1003, a model having an optimal pareto solution in the second population after iteration is stopped is obtained according to the objective function, and any model may be selected as the recommended model.

Optionally, all models having an optimal pareto solution and values of (A, L, and R) of the models may be sent to an application, and the application determines a model as the recommended model.

Optionally, the model having the optimal pareto solution in the second population may continue to be retrained by using data in all training sets, then the data in the validation set is input to each model in the first population, to obtain output data, and time for completing data processing by each model is recorded. Then, a model with the optimal pareto solution is obtained by using the objective function again, and any model is selected as the recommended model.

In another possible embodiment, when the recommended model is determined by using the evolution based model search algorithm, each model may be further initialized by directly using a branch structure and an input structure with highest scores in the step of initializing the population in S 1001 based on obtained scores of branch structures and input structures that are applicable to the application. Only basic operations in each model are randomly selected. Therefore, in S1003, only data processing accuracy and data processing time of the model are considered for objective optimization, and the objective function is f=(Amin, Lmin). In this case, when the mutation operation is performed in S 1004, only a basic operation of the model needs to be changed. Other steps are similar to S 1001 to S 1006.

According to the foregoing method, when determining the recommended model, the model recommendation apparatus considers both the data processing accuracy and time of the model and the score of the connection structure of the model, and obtains the model suitable for the application by using a multi-objective optimization algorithm.

It should be noted that, for ease of description, the foregoing method embodiments are represented as a series of actions. However, a person skilled in the art should appreciate that this application is not limited to the described sequence of the actions.

Another appropriate step combination that can be figured out by a person skilled in the art based on the content described above also falls within the protection scope of this application. In addition, a person skilled in the art should also appreciate that all embodiments described in this specification are preferred embodiments, and the related actions are not necessarily mandatory to this application.

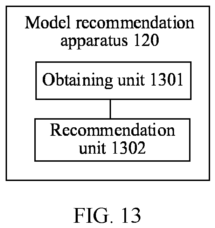

The model recommendation method provided in embodiments of this application is described above in detail with reference to FIG. 1 to FIG. 12A and FIG. 12B. The following further describes, with reference to FIG. 13, a model recommendation apparatus provided in embodiments of this application.

FIG. 13 is a schematic diagram of a model recommendation apparatus 120 according to this application. The model recommendation apparatus 120 is configured to implement the model recommendation method shown in FIG. 2, and includes an obtaining unit 1301 and a recommendation unit 1302.

The obtaining unit 1301 is configured to obtain a proxy dataset of an application, where the proxy dataset is used to evaluate a data processing capability of the application, and the application is run on a computing device.

The recommendation unit 1302 is configured to recommend a model suitable for the application based on the proxy dataset and a hardware parameter of the computing device.

It should be understood that the model recommendation apparatus 120 in this embodiment of this application may be implemented by an application-specific integrated circuit (application-specific integrated circuit, ASIC) or a programmable logic device (programmable logic device, PLD). The PLD may be a complex program logic device (complex programmable logical device, CPLD), a field programmable gate array (field programmable gate array, FPGA), generic array logic (generic array logic, GAL), or any combination thereof. Alternatively, when the model recommendation method shown in FIG. 2 may be implemented by using software, the model recommendation apparatus 120 and each module of the model recommendation apparatus 120 may be software modules. In this case, the model recommendation apparatus 120 may be executed by the computing device 110 shown in FIG. 1, or may be executed by an independent device.

Optionally, the model recommendation apparatus 120 may run on a first device. Before the model suitable for the application is recommended based on the proxy dataset and the hardware parameter of the computing device, the first device is specified by a data center based on the hardware parameter of the computing device after the data center obtains the hardware parameter of the computing device, where a hardware parameter of the first device is the same as the hardware parameter of the computing device.

Optionally, the model recommendation apparatus 120 may alternatively run on the computing device.

Optionally, the recommendation unit 1302 is further configured to: determine a set of basic operations suitable for the application based on the hardware parameter of the computing device, where the set includes a plurality of basic operations; determine a connection structure suitable for the application based on the hardware parameter of the computing device, where the connection structure is used to combine the plurality of basic operations into different models; and finally, recommend the model suitable for the application based on the set of basic operations, the connection structure, and the proxy dataset.

The model recommendation apparatus 120 according to this embodiment of this application may correspondingly perform the method described in embodiments of this application, and the foregoing and other operations and/or functions of the units in the model recommendation apparatus 120 are separately used to implement corresponding processes of the method in FIG. 2. For brevity, details are not described herein again.

In conclusion, according to the model recommendation apparatus 120 provided in this embodiment of this application, the recommendation unit may comprehensively consider a usage scenario of the application and the hardware parameter during running, to avoid a case in which the computing device running the application cannot support data processing performed by the model recommended by the model recommendation apparatus, and data processing accuracy and a data processing speed of the application are reduced.

This application further provides a model recommendation system, including a computing device and a model recommendation apparatus. The computing device is configured to run an application. The model recommendation apparatus is configured to implement operation steps of the method performed in the foregoing model recommendation method. The model recommendation apparatus may be deployed on the computing device, another device, or an independent device.

All or some of the foregoing embodiments may be implemented by using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific implementations of this application. Any variation or replacement readily figured out by a person skilled in the art based on the specific implementations provided in this application shall fall within the protection scope of this application.

## Claims

1. A model recommendation method, wherein the method comprises:
obtaining a proxy dataset of an application, wherein the proxy dataset is used to evaluate a data processing capability of the application, and the application is run on a computing device; and
recommending a model suitable for the application based on the proxy dataset and a hardware parameter of the computing device.

2. The model recommendation method according to claim 1, wherein the model recommendation method is run on a first device, and before the recommending a model suitable for the application, the method further comprises:
obtaining, by a data center, the hardware parameter of the computing device; and
specifying, by the data center, the first device based on the hardware parameter of the computing device, wherein a hardware parameter of the first device is the same as the hardware parameter of the computing device.

3. The model recommendation method according to claim 1, wherein the model recommendation method is run on the computing device.

4. The model recommendation method according to any one of claims 1 to 3, wherein the recommending a model suitable for the application based on the proxy data and a hardware parameter of the computing device specifically comprises:
determining a set of basic operations suitable for the application based on the hardware parameter of the computing device, wherein the set comprises a plurality of basic operations;
determining a connection structure suitable for the application based on the hardware parameter of the computing device, wherein the connection structure is used to combine the plurality of basic operations into different models; and
recommending the model suitable for the application based on the set of basic operations, the connection structure, and the proxy dataset.

5. The model recommendation method according to claim 4, wherein the connection structure comprises a branch structure and an input structure.

6. The model recommendation method according to any one of claims 1 to 4, wherein the data processing capability of the application comprises:
data processing accuracy and data processing efficiency of the application.

7. The model recommendation method according to any one of claims 1 to 5, wherein the hardware parameter of the computing device comprises a type of a chip comprised in the computing device, a quantity of cores of the chip, or a clock rate of the chip.

8. A model recommendation apparatus, wherein the apparatus communicates with a computing device, and the apparatus comprises an obtaining unit and a recommendation unit, wherein
the obtaining unit is configured to obtain a proxy dataset of an application, wherein the proxy dataset is used to evaluate a data processing capability of the application, and the application is run on the computing device; and
the recommendation unit is configured to recommend a model suitable for the application based on the proxy dataset and a hardware parameter of the computing device.

9. The model recommendation apparatus according to claim 8, wherein the recommendation unit is specifically configured to:
determine a set of basic operations suitable for the application based on the hardware parameter of the computing device, wherein the set comprises a plurality of basic operations;
determine a connection structure suitable for the application based on the hardware parameter of the computing device, wherein the connection structure is used to combine the plurality of basic operations into different models; and
recommend the model suitable for the application based on the set of basic operations, the connection structure, and the proxy dataset.

10. The model recommendation apparatus according to claim 9, wherein the connection structure comprises a branch structure and an input structure.

11. The model recommendation apparatus according to any one of claims 8 to 10, wherein the data processing capability of the application comprises:
data processing accuracy and data processing efficiency of the application.

12. The model recommendation apparatus according to any one of claims 8 to 11, wherein the hardware parameter of the computing device comprises a type of a chip comprised in the computing device, a quantity of cores of the chip, or a clock rate of the chip.

13. A computer device, comprising a processor and a memory, wherein the memory is configured to store computer-executable instructions, and the processor executes the computer-executable instructions in the memory, to enable the computer device to perform the operation steps of the method according to any one of claims 1 to 7.

14. A computer-readable storage medium, wherein the computer-readable storage medium comprises instructions, and when the instructions are run on a computer, the computer is enabled to perform the operation steps of the method according to any one of claims 1 to 7.
